# EUROPEAN PATENT APPLICATION

(11) **EP 4 557 481 A1**
(43) Date of publication of application: **21.05.2025**
(21) Application number: 24211442.9
(22) Date of filing: 07.11.2024
(51) Int. Cl.: H01M 50/249, H01M 50/583, H01M 50/579, B60L 1/00, B60L 3/04, H01H 35/14, H01H 1/00

(54) **BATTERY PACK**

(30) Priority: 17.11.2023 KR 20230159790
(71) Applicant: SAMSUNG SDI CO., LTD., Yongin-si, Gyeonggi-do 17084 (KR)
(72) Inventor: Jang, Sanghun, 17084 Yongin-si, Gyeonggi-do (KR)
(74) Representative: Gulde & Partner

(57) **Abstract**

A battery pack includes a frame portion configured to be installed in a vehicle, with a plurality of battery modules accommodated in the frame portion. A battery disconnect unit (BDU) is installed inside of the frame portion, with the battery disconnect unit being configured to transmit or block a voltage of the battery module. A power cutoff portion is configured to electrically connect the battery disconnect unit and the battery module and to block an electrical connection of the battery module and the battery disconnect unit in an event of a vehicle collision.

## Description

### BACKGROUND

### (a) Field

The present disclosure relates to a battery pack capable of being operated to automatically turn off the power when a collision impact is transferred while being installed in an electric vehicle.

### (b) Description of the Related Art

In general, when a running vehicle collides with an external object at high speed and the battery pack is physically deformed, a fire may occur due to a short circuit of the battery cells inside battery pack.

In this way, in situations where the battery pack is deformed during a vehicle collision and a risk of fire is expected, the battery management system (BMS) must properly cut off the contactor, and when the BMS fails due to battery pack impact, the cut off operation may not be performed.

In other words, the contactor may remain in a closed state and the internal electrical energy is connected to outside of the battery, which may cause a risk of electric shock or short circuit, causing damage.

Therefore, when a strong impact is applied to the battery pack, it is required to automatically block the power of the battery pack to prevent the damage due to electric shock or short circuit.

### SUMMARY

The present disclosure provides a battery pack capable of automatically blocking the power of the battery pack when an external impact is transferred to the battery pack due to the collision of a vehicle in which the battery pack is installed or the like.

According to the present disclosure a battery pack includes a frame portion configured to be installed in a vehicle, a plurality of battery modules accommodated in the frame portion, a battery disconnect unit (BDU) installed inside of the frame portion, the battery disconnect unit being configured to transmit or block a voltage of the battery module, and a power cutoff portion configured to electrically connect the battery disconnect unit and the battery module and to block an electrical connection of the battery module and the battery disconnect unit in an event of a vehicle collision.

Preferably, the battery disconnect unit may include a fuse configured to be electrically connected to the battery module and block power in an abnormal operation state.

Preferably, the power cutoff portion may include a guide plate installed inside of the frame portion, a first power terminal installed at a first location of the guide plate and electrically connected to the battery modules, a second power terminal installed at a second location of the guide plate and electrically connected to the battery disconnect unit, a connector portion slidably inserted between the first power terminal and the second power terminal and configured to electrically connect the first power terminal and the second power terminal to each other, and a weight member movable along the guide plate in an event of a vehicle impact, the weight member being configured to transfer an impact force of the vehicle to the connector portion to thereby block an electrical connection of the first power terminal and the second power terminal.

Preferably, the power cutoff portion may further include a guide member configured to guide the weight member to move in a slider direction (i.e. towards the connector portion), and which may be installed on the guide plate. In other words, the power cutoff portion may further include a guide member, which movably accommodates the weight member, and is installed on the guide plate.

Said guide member may be a guide pipe installed to protrude from a surface of the guide plate, with an interior of the guide pipe forming a movement space for a movement of the weight member.

Preferably, the weight member may be a spherically-shaped object that is movably accommodated within the guide pipe, configured to actuate the slidable connector portion.

Preferably, the weight member may be a ball-shaped movable object that is moved within the guide pipe by a moment of inertia when an impact force of the vehicle occurs.

The connector portion may preferably include a connector block inserted between the first power terminal and the second power terminal, the connector block being electrically connected to the first power terminal and to the second power terminal, a connection bar having a first end connected to a side surface of the connector block, and a slider connected to a second end of the connection bar and configured to move along the guide plate when impacted by the weight member.

Said slider may preferably be a block member connected to the connection bar and slidably installed inside of the guide pipe.

According to one preferred embodiment, the first power terminal may be electrically connected to the battery modules, and the first power terminal may include a side forming a first bent portion, the side being in surface contact with a portion of the connector block.

Further, the second power terminal may preferably be electrically connected to the battery disconnect unit, and the second power terminal may preferably include a side forming a second bent portion and being in surface contact with a portion of the connector block.

Preferably, the connector block may be polygonal block-shaped and the connector block includes a first side in surface contact with the first bent portion of the first power terminal, and a second side in surface contact with the second bent portion of the second power terminal.

In another preferred embodiment, the connector portion may include an insert block inserted into and electrically connected to the first power terminal and the second power terminal, a connection bar having a first end connected to a side surface of the insert block, and a slider connected to a second end of the connection bar and configured to move along the guide plate when impacted by the weight member.

Preferably, the first power terminal and the second power terminal may be plate-shaped and spaced apart from each other.

Preferably, the insert block may include an insertion portion into which an end of the first power terminal and an end of the second power terminal may be inserted together.

In another preferred embodiment, the battery pack may further include a cover portion configured to cover an upper portion of the power cutoff portion may be installed in the frame portion.

According to an embodiment, when an exterior impact such as a vehicle collision is transferred to a battery pack that is installed in an electric vehicle, the electrical connection between the battery modules and the battery disconnect unit (BDU) may be automatically blocked, and thereby an accident such as explosion of the battery pack due to a vehicle accident may be prevented.

### BRIEF DESCRIPTION OF THE DRAWINGS

FIG. 1 is a perspective view schematically showing a battery pack according to a first embodiment of the present disclosure.
FIG. 2 is a perspective view schematically showing a state in which a power cutoff portion according to a first embodiment of the present disclosure is installed in a frame portion.
FIG. 3 is a perspective view schematically showing a power cutoff portion according to a first embodiment of the present disclosure.
FIG. 4 is a perspective view schematically showing an operation state of the power cutoff portion of FIG. 3.
FIG. 5 is a perspective view schematically showing a state in which a power cutoff portion according to a second embodiment of the present disclosure is installed in a frame portion.
FIG. 6 is a perspective view schematically showing a power cutoff portion according to a second embodiment of the present disclosure.
FIG. 7 is a perspective view schematically showing an operation state of the power cutoff portion of FIG. 6.

### DETAILED DESCRIPTION OF THE EMBODIMENTS

Hereinafter, the present disclosure will be described more fully with reference to the accompanying drawings, in which embodiments of the disclosure are shown. The drawings and description are to be regarded as illustrative in nature and not restrictive. Like reference numerals designate like elements throughout the specification.

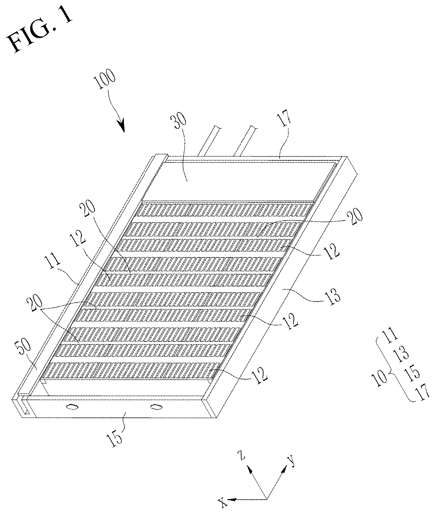

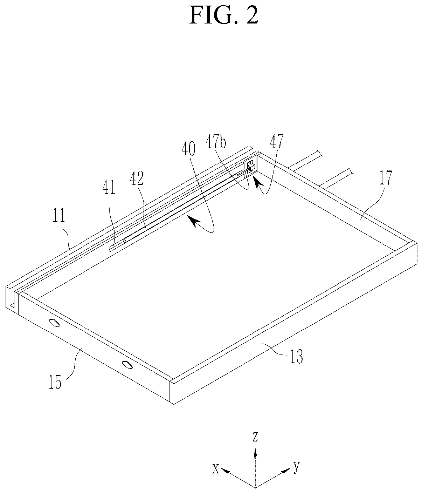

FIG. 1 is a perspective view schematically showing a battery pack according to a first embodiment of the present disclosure. FIG. 2 is a perspective view schematically showing a state in which a power cutoff portion according to the first embodiment of the present disclosure is installed in a frame portion.

As shown in FIG. 1 and FIG. 2, a battery pack 100 according to the first embodiment of the present disclosure includes a plurality of battery modules 12 installed (for use) in a vehicle, a frame portion 10 accommodating the plurality of battery modules, a battery disconnect unit 30, DBU, installed inside the frame portion 10 and configured to transmit or block voltages of the battery modules, and a power cutoff portion 40 installed between the battery disconnect unit 30 and the battery modules 12 and configured to block an electrical connection of the battery modules 12 and the battery disconnect unit 30 in an event of a vehicle collision.

The frame portion 10 may include a first side frame 11 configured to support a first side surface of the plurality of battery modules 12, a second side frame 13 configured to support a second side surface of the plurality of battery modules 12, a first end frame 15 having its ends connected to a first end of each of the first side frame 11 and the second side frame 13, and a second end frame 17 having its ends connected to a second end of each of the first side frame 11 and the second side frame 13.

The first side frame may be installed to support a first side of the plurality of battery modules 12. The second side frame 13 may be installed to support a second side of the plurality of battery modules 12.

The first end frame 15 may be installed to connect between the first ends of the first side frame 11 and the second side frame 13. That is, a first end of the first end frame 15 may be connected to a first end of the first side frame 11 by a fastening member, and a second end thereof may be connected to a first end of the second side frame 13 by a fastening member.

The second end frame 17 may be installed to connect between the second ends of the first side frame 11 and the second side frame 13. That is, a first end of the second end frame 17 may be connected to a second end of the first side frame 11 by a fastening member, and a second end thereof may be connected to a second end of the second side frame 13 by a fastening member.

The plurality of battery modules 12 may be electrically connected to each other by holders 20 within the interior of the frame portion 10. That is, a plurality of holders 20 may be installed to be spaced apart from each other at equal intervals in a first direction (y-axis) of the frame portion 10, such that a plurality of unit battery modules 10 may be electrically connected to each other.

A battery disconnect unit 30 may be installed inside frame portion 10. The battery disconnect unit 30 may be one installed when the battery pack 100 is installed in an electric vehicle and may include a pre-charge circuit (including a relay and resistor) and a fuse such as a positive electrode main relay and a negative electrode main relay. The pre-charge circuit may perform a function of an initial charging charge circuit. The main relay coupled in parallel with the pre-charge circuit may be closed to form a charging and discharging circuit at normal charging and discharging after completing the initial charging. The configuration of the battery disconnect unit 30 is a known configuration, and detailed description of the configuration and operation will be omitted below.

The power cutoff portion 40 selectively connects between the battery disconnect unit 30 and the battery modules 12 and may be installed in the frame portion 10. In other words, power cutoff portion 40 may be integrally formed with the frame portion 10, preferably with the first side frame 11. The power cutoff portion 40 may be installed such that, in the interior of the frame portion 10, a selective electrical connection may be enabled between the battery disconnect unit 30 and the battery modules 12. That is, the power cutoff portion 40 may be installed to be configured to electrically connect the battery disconnect unit 30 and the battery modules 12 to each other in an initial state installed in the electric vehicle, and to block an electrical connection of the battery disconnect unit 30 and the battery modules 12 when an impact is transferred to the battery pack 100 due to a vehicle accident or the like.

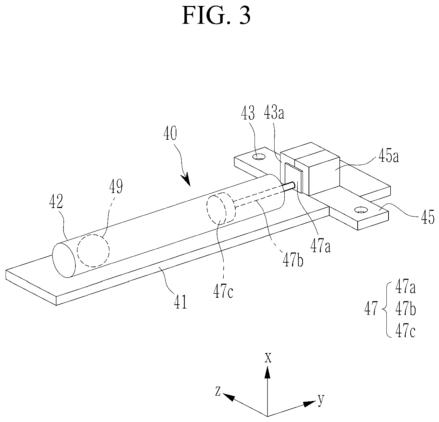

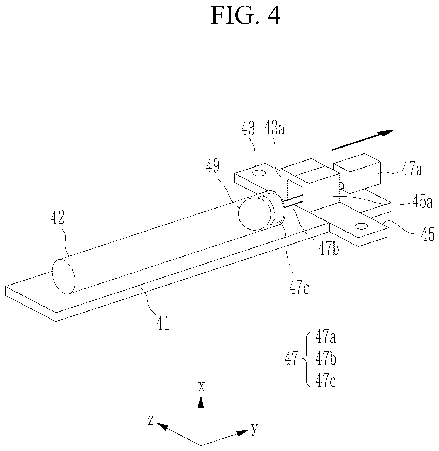

FIG. 3 is a perspective view schematically showing a power cutoff portion according to a first embodiment of the present disclosure. FIG. 4 is a perspective view schematically showing an operation state of the power cutoff portion of FIG. 3.

Referring to FIG. 3 and FIG. 4, in more detail, the power cutoff portion 40 may include a guide plate 41 installed in the interior of the frame portion 10, a first power terminal 43 installed at a first location of the guide plate 41 and electrically connected to the battery modules 12. In other words, the power cutoff portion 40 may include a guide plate 41 integrally formed with one side of the frame portion 10, preferably with first side frame 11 (as shown in FIG.2). A connector portion 47 may be installed at a second location of the guide plate 41 and electrically connected to the battery disconnect unit 30, the connector portion 47 slidably inserted between the first power terminal 43 and a second power terminal 45 and configured to electrically connect the first power terminal 43 and the second power terminal 45 to each other. The power cutoff portion may also include a weight member 49 movable along the guide plate 41 in an event of a vehicle impact, the weight member is thereby configured to transfer a force from the impact to the connector portion 47.

The guide plate 41 may be installed on an inner surface of one of the first side frame 11 or the second side frame 13 that are inside of the frame portion 10. In the present embodiment, the guide plate 41 may be installed in the first side frame 11.

The guide plate 41 may be installed to guide the weight member 49 (described later) to be moved by the moment of inertia by the impact amount at the time of the vehicle collision. For such a purpose, the guide plate 41 may be installed as a length shape along an inner wall surface of the first side frame 11.

A guide member 42 for a movement of the weight member 49 may be installed on the guide plate 41. The guide member 42 may be installed to protrude on a surface along a length direction of the guide plate 41, and the guide member 42 may be installed as a guide pipe inside which a movement space for the movement of the weight member 49 is formed. In other words, the guide member 42 may be a guide pipe (guide tube), which movably accommodates the weight member 49. Hereinafter, the same reference numeral is assigned to the guide member and the guide pipe.

The guide pipe 42 may be installed as a cylindrical pipe shape such that the weight member 49, in a preferably spherical shape, may be movable therein. The guide pipe 42 may be installed to have a first side located on a first side of the guide plate 41 and a second side located close to the power cutoff portion 40.

The weight member 49 may be formed as a weight member in a spherical shape (ball-shaped) such that the movement along the guide pipe 42 is easy.

Therefore, when an impact amount is transferred to the battery pack 100 due to a collision accident while the vehicle is being driven, the weight member 49 may move along the guide pipe 42 by the moment of inertia and collide with the connector portion 47 constituting the power cutoff portion 40 such that the power cutoff operation is performed.

The first power terminal 43 and the second power terminal 45 may be installed on the guide plate 41. The first power terminal 43 and the second power terminal 45 may be installed on both sides of the guide plate 41 facing each other in a width direction at a position where the battery disconnect unit 30 is installed.

The first power terminal 43 may be installed at a first location of the guide plate 41 in the width direction and may be electrically connected to the battery module 12. The first power terminal 43 may be electrically connected to the battery module 12, and a first bent portion 43a may be formed on a first side of the first power terminal 43. The first bent portion 43a may be bent on a first side of the first power terminal 43 so as to protrude in an upward direction from the guide plate 41.

In the first bent portion 43a, a portion of the first power terminal 43 is bent so as to be spaced apart from the guide plate 41, which enables connector block 47a , being a part of the connector portion 47, to move between the guide plate 41 and the first power terminal 43.

The second power terminal 45 may be installed at the second location of the guide plate 41 in the width (z-axis) direction and may be electrically connected to the battery disconnect unit 30. The second power terminal 45 may be installed at the second location facing the first location at which the first power terminal 43 is installed with the guide plate 41 interposed between the first power terminal 43 and the second power terminal 45. The second power terminal 45 may be electrically connected to the battery modules 12.

The second power terminal 45 may be installed at the second location of the guide plate 41 to be electrically connected to the battery disconnect unit 30. A second bent portion 45a may be formed on a first side of the second power terminal 45. In the second bent portion 45a, a portion of the second power terminal 45 is bent so as to be spaced apart from the guide plate 41, which enables a connector block 47a, being a part of the connector portion 47, to move between the guide plate 41 and the second power terminal 45.

The first power terminal 43 and the second power terminal 45 may not be in direct electrical contact.

That is, the first bent portion 43a and the second bent portion 45a may be located to be adjacent to each other on an upper side of the guide plate 41 (but not in direct electric contact to each other). As such, the connector block 47a as a part of the connector portion 47 may be movably inserted between the first bent portion 43a and the second bent portion 45a. That is, as described above, the connector portion 47 may be slidably inserted between the first power terminal 43 and the second power terminal 45, and may selectively electrically connect the first power terminal 43 and the second power terminal 45 to each other.

The connector portion 47 may be initially installed to electrically connect the first power terminal 43 and the second power terminal 45. And the connector portion 47 may be installed to block an electrical connection of the first power terminal 43 and the second power terminal 45 when an impact force is transferred to the battery pack 100 due to an accident such as a vehicle collision or the like.

In more detail, the connector portion 47 may include the connector block 47a insertable between the first power terminal 43 and the second power terminal 45 and configured to electrically connect the first power terminal 43 and the second power terminal 45, a connection bar 47b having a first end connected to a side surface of the connector block 47a, and the slider 47c connected to a second end of the connection bar 47b and configured to move along the guide plate 41 when impacted by the weight member 49. The connector block 47a may be inserted into a space formed by the first bent portion 43a of the first power terminal 43 and the second bent portion 45a of the second power terminal 45, and the connector block 47a may be in (direct) surface contact with each of the first bent portion 43a and the second bent portion 45a. In particular, the connector block 47a may be formed of an electrically conductive material, e.g. a metal material, and may be in surface contact with a metal material of the first bent portion 43a and the second bent portion 45a to electrically connect the first bent portion 43a and the second bent portion 45a to each other.

The connector block 47a may be installed to be in (direct) surface contact with the first bent portion 43a and the second bent portion 45a in the initial state in which the vehicle collision has not occurred, and to separate from the first bent portion 43a and the second bent portion 45a when an impact force from a vehicle collision is transferred to the battery pack 100. For such a purpose, the slider 47c to which the vehicle impact force is transferred by the connection bar 47b may be installed on the side surface of the connector block 47a. The connection bar 47b may have a first end connected to the side surface of the connector block 47a and a second end connected to a side surface of the slider 47c.

The slider 47c may be installed to be slidable inside of the guide pipe 42 on the upper side of the guide plate 41 while being connected to the connection bar 47b. The slider 47c is one installed within the guide pipe 42 to be movable when receiving an impact of the weight member 49 and may be a block member that is movable along the guide pipe 42 while being in sufficient surface contact at the time of impact of the weight member 49.

The slider 47c and the connector block 47a may be connected by the connection bar 47b and may move together along the guide plate 41 by the impact of the weight member 49. Therefore, when the impact of the weight member 49 occurs, the connector block 47a may move to release the electrical connection of the first power terminal 43 and the second power terminal 45.

A cover portion 50, as shown in FIG.1, covering an upper portion of the power cutoff portion 40 may be installed in the frame portion 10. The cover portion 50 may be installed in a plate shape in the frame portion 10 so as to cover the upper portion at which the power cutoff portion 40 is installed. The cover portion 50 may be installed in a rectangular planar shape in a first side position of the frame portion 10 such that the power cutoff portion 40 is exposed. A portion of an edge of the cover portion 50 may be coupled or welded to an inner wall surface of the frame portion 10 while being in surface contact by a predetermined fastening member.

As described above, when an exterior impact for, as in a vehicle collision, is transferred to the battery pack 100 with the power cutoff portion 40 is installed in an electric vehicle, the battery pack 100 of the first embodiment of the present disclosure may automatically block the electrical connection of the battery module 12 and the battery disconnect unit (BDU) such that an accident (e.g., an explosion) involving the battery pack due to a vehicle accident is prevented.

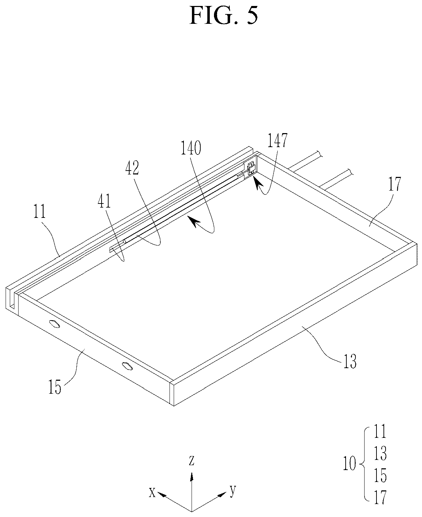

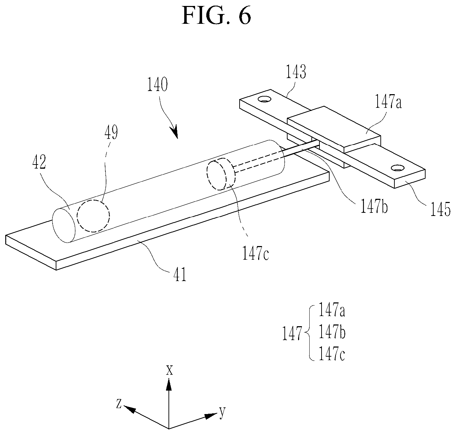

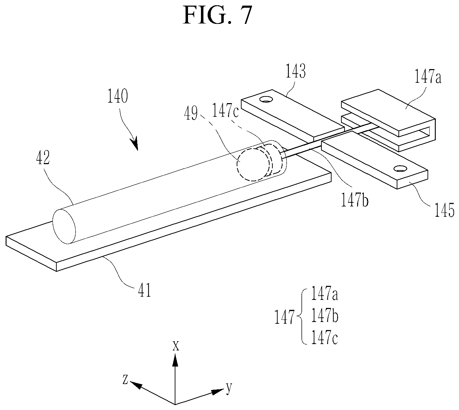

FIG. 5 is a perspective view schematically showing a state in which a power cutoff portion according to a second embodiment of the present disclosure is installed in a frame portion. FIG. 6 is a perspective view schematically showing a power cutoff portion according to the second embodiment of the present disclosure. FIG. 7 is a perspective view schematically showing an operation state of the power cutoff portion of FIG. 6. The same reference numbers as in FIG. 1 to FIG. 4 refer to identical or similar members with the same or similar functions. Hereinafter, detailed descriptions of the same reference numbers will be omitted.

As shown in FIG. 5 to FIG. 7, a power cutoff portion 140 of the battery pack according to the second embodiment of the present disclosure may include the guide plate 41 installed within the frame portion, a first power terminal 143 installed at the first location of the guide plate 41 and electrically connected to the battery module, a second power terminal 145 installed at the second location of the guide plate 41 and electrically connected to the battery disconnect unit 30. A connector portion 147 is slidably inserted between the first power terminal 143 and the second power terminal 145 and configured to electrically connect the first power terminal 143 and the second power terminal 145 to each other. A weight member 49 is configured to move along the guide plate 41 in an event of the vehicle impact and transfer an impact force from a vehicle collision to the connector portion 147.

Here, the first power terminal 143 and the second power terminal 145 may be installed on both sides of the guide plate 41 and face each other in the width direction (z-axis direction) at a position where the battery disconnect unit 30 is installed. The first power terminal 143 may be installed at the first location of the guide plate 41 in the width direction and may be electrically connected to the battery modules 12. The second power terminal 145 may be installed at the second location of the guide plate 41 in the width direction and may be electrically connected to the battery disconnect unit 30. The first power terminal 143 and the second power terminal 145 may be installed in the state of being spaced apart from each other with the guide plate 41 interposed therebetween. The first power terminal 143 and the second power terminal 145 are installed in plate shapes interposing the guide plate 41 and may be installed to have a same height (in the x-axis direction) on a same plane. The first power terminal 143 and the second power terminal 145 may be selectively electrically connected to each other by the connector portion 147. The first power terminal 143 and the second power terminal 145 are not in direct electrical contact to each other.

As described above, the connector portion 147 may be slidably inserted between the first power terminal 143 and the second power terminal 145, and the connector portion 147 may selectively electrically connect the first power terminal 143 and the second power terminal 145 to each other. In more detail, the connector portion 147 may include an insert block 147a inserted to the first power terminal 143 and the second power terminal 145, a connection bar 147b having a first end connected to a side surface of the insert block 147a, and a slider 147c connected to a second end of the connection bar 147b. The slider 147c is configured to move along the guide plate 41 when impacted by the weight member 49.

The insert block 147a is formed to be bent in a 'C' shape, and the first power terminal 143 and the second power terminal 145 may be installed such that the first power terminal 143 and the second power terminal 145 are inserted into the interior space formed by the C shape to be in surface contact with the insert block 147a. Thus, the first power terminal 143 and the second power terminal 145 may be electrically connected to each other. The insert block 147a may be installed to block an electrical connection of the first power terminal 143 and the second power terminal 145 when an impact force is transferred is transferred to the battery pack 100 due to an accident such as a vehicle collision or the like. The insert block 147a may be formed of a metal material, and may be in surface contact with metal materials of both the first power terminal 143 and the second power terminal 145, and the insert block 147a may electrically connect the first power terminal 143 and the second power terminal 145 to each other. The insert block 147a may be installed such that, in an initial state in which the vehicle collision has not occurred, the insert block 147a is in surface contact with the first power terminal 143 and the second power terminal 145. When an impact force due to a vehicle collision is transferred, the insert block 147a separates from the first power terminal 143 and the second power terminal 145.

The slider 147c to which the vehicle impact force is transferred by the connection bar 147b may be installed on the side surface of the connection bar 147b. The connection bar 147b may have a first end connected to the side surface of the insert block 147a and a second end connected to the side surface of the slider 147c. The slider 147c may be slidably installed inside the guide pipe 42 on the upper side of the guide plate 41 and connected to the connection bar 147b. The slider 147c is installed within the guide pipe 42 to be movable by the impact of the weight member 49, and the slider 147c may be a block member capable of moving along the guide pipe 42 when receiving a sufficient contact from the impact of the weight member 49. The slider 147c and the insert block 147a are connected by the connection bar 147b and may move together along the guide plate 41 by the impact of the weight member 49. Therefore, when the impact of the weight member 49 occurs, the insert block 147a may move to release the electrical connection of the first power terminal 143 and the second power terminal 145.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**REFERENCE SIGNS**

| | | | |
|---|---|---|---|
| 10: | frame portion | 11: | the first side frame |
| 13: | second side frame | 20: | holder |
| 30: | battery disconnect unit | 40: | power cutoff portion |
| 41: | guide plate | 43, 143: | first power terminal |
| 43a: | first bent portion | 45, 145: | second power terminal |
| 45a: | second bent portion | 47, 147: | connector portion |
| 47a: | connector block | 47b, 147b: | connection bar |
| 47c, 147c: | slider | 49: | weight member |
| 50: | cover portion | 147a: | insert block |

## Claims

1. A battery pack (100) comprising:
a frame portion (10) configured to be installed in a vehicle;
a plurality of battery modules (12) accommodated in the frame portion (10);
a battery disconnect unit (30) installed inside of the frame portion (10), the battery disconnect unit being (30) configured to transmit or block a voltage of the battery module (12); and
a power cutoff portion (40, 140) configured to electrically connect the battery disconnect unit (30) and the battery module (12) and to block an electrical connection of the battery module (12) and the battery disconnect unit (30) in an event of a vehicle collision.

2. The battery pack (100) of claim 1, wherein the battery disconnect unit (30) comprises a fuse configured to be electrically connected to the battery module (12) and to block power in an abnormal operation state.

3. The battery pack (100) of one of claims 1 or 2, wherein the power cutoff portion (40, 140) comprises:
a guide plate (41) installed inside of the frame portion (10);
a first power terminal (43, 143) installed at a first location of the guide plate (41) and electrically connected to the battery modules (12);
a second power terminal (45, 145) installed at a second location of the guide plate (41) and electrically connected to the battery disconnect unit (30);
a connector portion (47, 147) slidably inserted between the first power terminal (43, 143) and the second power terminal (45, 145) and configured to electrically connect the first power terminal (43, 143) and the second power terminal (45, 145) to each other; and
a weight member (49) movable along the guide plate (41) in an event of a vehicle impact, the weight member (49) being configured to transfer an impact force of the vehicle to the connector portion (47, 147) to thereby block an electrical connection of the first power terminal (43, 143) and the second power terminal (45, 145).

4. The battery pack (100) of claim 3, further comprising a guide member (42) configured to guide the weight member (49) to move towards the connector portion, and the guide member (42) being installed on the guide plate (41).

5. The battery pack (100) of claim 4, wherein the guide member (42) is a guide pipe installed to protrude from a surface of the guide plate (41), with an interior of the guide pipe forming a movement space for a movement of the weight member (49).

6. The battery pack (100) of claim 5, wherein the weight member (49) is a ball-shaped movable object that is moved within the guide pipe by a moment of inertia when an impact force of the vehicle occurs.

7. The battery pack (100) of one of claims 3 to 6, wherein the connector portion (47) comprises:
a connector block (47a) inserted between the first power terminal (43) and the second power terminal (45), the connector block (47a) being electrically connected to the first power terminal (43) and to the second power terminal (45);
a connection bar (47b) having a first end connected to a side surface of the connector block (47a); and
a slider (47c) connected to a second end of the connection bar (47b) and configured to move along the guide plate (41) when impacted by the weight member (49).

8. The battery pack (100) of claim 7, wherein the slider (47c) is a block member connected to the connection bar (47b) and slidably installed inside of the guide pipe.

9. The battery pack (100) of one of claims 7 or 8, wherein the first power terminal (43) is electrically connected to the battery modules (12), and the first power terminal (43) includes a first side forming a first bent portion (43a), the side being in surface contact with a portion of the connector block (47a).

10. The battery pack (100) of claim 9, wherein the second power terminal (45) is electrically connected to the battery disconnect unit (30), and the second power terminal (45) includes a second side forming a second bent portion (45a) and being in surface contact with a portion of the connector block (47a).

11. The battery pack (100) of claim 10, wherein the connector block (47a) is polygonal block-shaped, and the connector block (47a) includes a first side in surface contact with the first bent portion (43a) of the first power terminal (43), and a second side in surface contact with the second bent portion (45a) of the second power terminal (45).

12. The battery pack (100) of claim 6, wherein the connector portion (147) comprises:
an insert block (147a) inserted into and electrically connected to the first power terminal (143) and the second power terminal (145);
a connection bar (147b) having a first end connected to a side surface of the insert block (147a); and
a slider (147c) connected to a second end of the connection bar (147b) and configured to move along the guide plate (41) when impacted by the weight member (49).

13. The battery pack (100) of claim 12, wherein the first power terminal (143) and the second power terminal (145) are plate-shaped and spaced apart from each other.

14. The battery pack (100) of one of claims 12 or 13, wherein the insert block (147a) includes an insertion portion into which an end of the first power terminal (143) and an end of the second power terminal (145) are inserted.

15. The battery pack (100) of one of the preceding claims, further comprising a cover portion (50) configured to cover an upper portion of the power cutoff portion (40, 140) is installed on the frame portion (10).
